# EUROPÄISCHE PATENTANMELDUNG

(11) **EP 0 707 155 A1**
(43) Veröffentlichungstag der Anmeldung: **17.04.1996**
(21) Anmeldenummer: 95116072.0
(22) Anmeldetag: 12.10.1995
(51) Int. Cl.: F16B 37/14, B41F 13/00

(54) **Maschinenschraube, insbesondere für eine Druckmaschine**

(30) Priorität: 14.10.1994 DE 9416549 U
(71) Anmelder: MAN Roland Druckmaschinen AG, D-63075 Offenbach (DE)
(72) Erfinder: Sellmann, Karlheinz, D-65343 Eltville (DE)
(74) Vertreter: Marek, Joachim, Dipl.-Ing.

(57) **Zusammenfassung**

Die Erfindung betrifft eine Maschinenschraube mit zylinderförmigem Kopf zur einstellbaren Befestigung an vorzugsweise einer Druckmaschine. Aufgabe der Erfindung ist es, eine leicht auswechselbare, dauerhafte farbliche Kennzeichnung für Maschinenschrauben zu entwickeln. Gelöst wird dies dadurch, daß auf der Mantelfläche 4 ein diese umgebender Ring 5 angeordnet ist, der aus einem in unterschiedlichen Farben ausgeführtem Material besteht.

## Beschreibung

Die Erfindung betrifft eine Maschinenschraube mit zylindrischem Kopf zur einstellbaren Befestigung von Bauteilen an einer Maschine, insbesondere einer Druckmaschine.

Bei Maschinenschrauben der angegebenen Art hat es sich bewährt, alle Schrauben, die zur Einstellung jeweils eines bestimmten Bauteils an einer Maschine verstellt werden müssen, einheitlich farblich zu kennzeichnen, um die Anleitung in der Gebrauchsanweisung und die Handhabung für den Bediener besonders einfach zu gestalten. Es ist bekannt, die farbliche Kennzeichnung der Schrauben durch Anstreichen des Schraubenkopfes mit der jeweils gewünschten Farbe vorzunehmen. Nachteilig dabei ist jedoch, daß die Farbe auf dem Schraubenkopf in der Regel schlecht haftet und nach einiger Zeit soweit abgeblättert ist, daß eine Unterscheidung der Schrauben nach ihrer farblichen Kennzeichnung nicht mehr möglich ist. Weiterhin ist es bekannt, zur Kennzeichnung von Schrauben den Schraubenkopf mit einer farbigen Scheibe zu unterlegen, deren Durchmesser etwas größer ist als der Durchmesser des Schraubenkopfes. Da die farbige Scheibe dabei jedoch von dem Schraubenkopf zumindest teilweise abgedeckt wird, ist sie meist schlecht sichtbar. Es besteht zudem, insbesondere bei Druckmaschinen, das Problem, daß diese Scheiben nach längerem Betrieb der Maschine durch schwer entfernbare Verschmutzungen, beispielsweise solche, die durch das Farbwerk verursacht werden, völlig unkenntlich werden, so daß sie ausgetauscht werden müßten. Ein Austauschen der Scheiben ist jedoch aufwendig.

Der Erfindung liegt die Aufgabe zugrunde, bei Maschinenschrauben der eingangs genannten Art eine einfache, leicht auswechselbare und dauerhafte farbliche Kennzeichnung zu ermöglichen.

Die Aufgabe wird erfindungsgemäß dadurch gelöst, daß auf der Mantelfläche der Schraube ein die Mantelfläche umgebender Ring angeordnet ist, der aus einem in unterschiedlichen Farben herstellbaren Material besteht.

Die erfindungsgemäße Lösung ermöglicht es, Maschinenschrauben auf einfache Weise mit einem Ring in der gewünschten Farbe zu kennzeichnen, indem der Ring vor oder nach dem Einsetzen der Schraube auf deren Mantelfläche aufgesteckt wird. Die so gekennzeichneten Schrauben sind gut erkennbar. Der Ring sitzt fest auf der Mantelfläche der Schraube auf. Er greift sich nicht ab, so daß die Kennzeichnung auch haltbar ist. Wird der Ring versehentlich beschädigt oder ist er nach längerer Einsatzzeit der Maschine durch Verschmutzungen unkenntlich geworden, so kann er leicht vom Schraubenkopf gelöst und durch einen neuen Ring gleicher Farbe ersetzt werden. Besonders gut sichtbar ist die farbliche Kennzeichnung, wenn die Breite des Rings im wesentlichen der Höhe des Schraubenkopfes entspricht. Da der Ring nicht fester Bestandteil der Schraube ist, ist die Lagerhaltung nur einer Schraubenausführung erforderlich, die bei der Montage mit einem Ring in der gewünschten Farbe verbunden wird.

Nach einem weiteren Vorschlag der Erfindung kann an dem dem Schraubenschaft zugewandten Rand des Schraubenkopfes ein nach außen vorspringender Ringbund angeordnet sein, an den sich der farbige Ring anlegt. Weiterhin kann vorgesehen sein, daß in der Mantelfläche eine sich in Umfangsrichtung erstreckende Vertiefung ausgebildet ist und daß der elastisch aufweitbare Ring einen Abschnitt aufweist, der in die Vertiefung einrastet. Auf diese Weise wird ein Abrutschen des Rings von der Mantelfläche des Schraubenkopfes sicher verhindert. Dies kann vorteilhaft dadurch erreicht werden, daß in der Mantelfläche des Schraubenkopfes eine umlaufende Ringnut vorgesehen ist, in die ein in der Bohrungsfläche des Rings ausgebildeter Wulst einrastbar ist.

Die Erfindung wird nachfolgend anhand eines Ausführungsbeispiels näher erläutert, das in der Zeichnung dargestellt sind. Es zeigen
- Figur 1: eine erfindungsgemäße Maschinenschraube mit aufgesetztem farbigem Ring und
- Figur 2: die Maschinenschraube und den Ring gemäß Figur 1 vor der Montage.

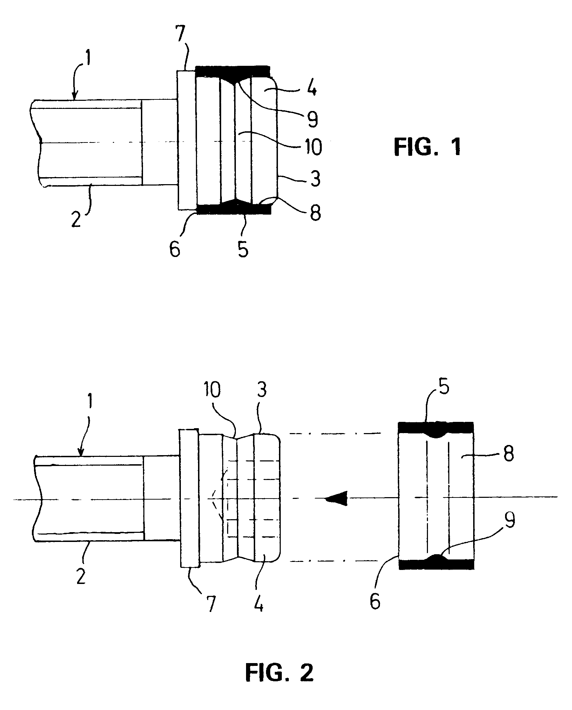

Figur 1 zeigt eine Schraube 1 zum Einstellen eines Bauteils an einer Druckmaschine mit einem Schraubenschaft 2 und einem Schraubenkopf 3. Zum Drehen der Schraube 1 mittels eines Schraubenschlüssels weist der Schraubenkopf 3 in seiner Stirnfläche einen Innensechskant auf. Auf die Mantelfläche 4 des Schraubenkopfes 3 ist ein Ring 5 aufgesteckt, der die Mantelfläche 4 umgibt. Der Ring 5 besteht aus einem eingefärbten, elastisch aufweitbaren Material, beispielsweise aus einem Kunststoff, der in verschiedenen Farben eingefärbt werden kann. Der Innendurchmesser des Rings 5 ist an den Außendurchmesser des Schraubenkopfes 3 angepaßt. Die Breite des Rings 5 entspricht etwa der Höhe des Schraubenkopfes 3. Mit seinem unteren Ende 6 liegt der Ring 5 auf einem radial nach außen vorspringenden, umlaufenden Ringbund 7 auf, der an dem dem Schraubenschaft 2 benachbarten Ende des Schraubenkopfes 3 ausgebildet ist. In der Mitte der Bohrungsfläche 8 des Rings 5 ist ein radial nach innen vorspringender Wulst 9 ausgebildet, der in eine umlaufende Ringnut 10 in der Mantelfläche des Schraubenkopfes 3 eingerastet ist.

Die Montage des Rings 5 auf den Schraubenkopf 3 geschieht, wie in Figur 2 dargestellt, dadurch daß der Ring 5 in axialer Richtung auf den Schraubenkopf 3 aufgesteckt und bis zur Anlage an dem Ringbund 7 bewegt wird. Der Ring 5 ist so elastisch, daß er sich leicht aufweitet, wenn der Wulst 9 über den oberen Teil des Schraubenkopfes 3 hinweggleitet. Durch den Ringbund 7 wird verhindert, daß der Ring 5 bei der Montage über die Rastposition hinausgleitet.

## Patentansprüche

1. Maschinenschraube mit zylindrischem Kopf zur einstellbaren Befestigung von Bauteilen an einer Maschine, insbesondere einer Druckmaschine, **dadurch gekennzeichnet**, daß auf der Mantelfläche (4) ein diese umgebender Ring (5) angeordnet ist, der aus einem in unterschiedlichen Farben herstellbaren Material besteht.

2. Maschinenschraube nach Anspruch 1, dadurch gekennzeichnet, daß die Breite des Rings (5) im wesentlichen der Höhe des Schraubenkopfes (3) entspricht.

3. Maschinenschraube nach einem der Ansprüche 1 oder 2, dadurch gekennzeichnet, daß an dem dem Schraubenschaft (2) zugewandten Rand des Schraubenkopfes (3) ein nach außen vorspringender Ringbund (7) angeordnet ist.

4. Maschinenschraube nach einem der vorhergehenden Ansprüche, dadurch gekennzeichnet, daß in der Mantelfläche (4) des Schraubenkopfes (3) eine sich in Umfangsrichtung ersteckende Vertiefung ausgebildet ist und daß der elastisch aufweitbare Ring (5) einen Abschnitt aufweist, der in die Vertiefung einrastet.

5. Maschinenschraube nach Anspruch 4, dadurch gekennzeichnet, daß in der Mantelfläche des Schraubenkopfes eine umlaufende Ringnut (10) vorgesehen ist, in die ein in der Bohrungsfläche (8) des Rings (5) ausgebildeter Wulst (9) einrastbar ist.
